(19) Europäisches Patentamt

European Patent Office

Office européen des brevets

(11) Veröffentlichungsnummer: **0 537 766 A2**

# (12) EUROPÄISCHE PATENTANMELDUNG

(21) Anmeldenummer: **92117724.2**

(22) Anmeldetag: **16.10.92**

(51) Int. Cl.⁵: **G01F 1/84**

(30) Priorität: **17.10.91 DE 4134319**

(43) Veröffentlichungstag der Anmeldung:
**21.04.93 Patentblatt 93/16**

(84) Benannte Vertragsstaaten:
**AT BE CH DE ES FR GB IT LI NL**

(71) Anmelder: **Pfister GmbH**
**Stätzlinger Strasse 70**
**W-8900 Augsburg(DE)**

(72) Erfinder: **Häfner, Hans Wilhelm**
**Fichtenweg 15**
**W-8890 Aichach-Walchshofen(DE)**

(74) Vertreter: **Fiener, Josef**
**Patentanwälte Kahler, Käck & Fiener,**
**Maximilianstrasse 57 Postfach 12 49**
**W-8948 Mindelheim (DE)**

(54) **Verfahren und Vorrichtung zur Massenstrombestimmung nach dem Coriolis-Prinzip.**

(57) Zur Erhöhung der Meßgenauigkeit bei der Massenstrombestimmung eines Fördergutes, insbesondere eines Mehrphasenstroms aus einem Schüttgut und einem Gas nach dem Coriolis-Prinzip, wird vorgeschlagen, den Massenstrom (M3) des Förderfluids, insbesondere Förderluft, vor Eintritt in das Coriolis-Meßrad (4) zu messen und dann die Differenz (M2) zwischen dem durch das Antriebsdrehmoment an dem Meßrad (4) ermittelten Gesamtmassenstrom (M1) des Fördergutes zusammen mit dem Förderfluid und dem gesondert festgestellten Massenstrom (M3) des Förderfluids zu bilden. In bevorzugter Ausführung ist dabei auch die Förderfluid-Meßvorrichtung als Coriolis-Meßrad ausgebildet. Durch das vorgeschlagene Verfahren und die entsprechende Vorrichtung läßt sich der Förderfluid-Massenstrom in der Bestimmung des Massenstroms des Fördergutes berücksichtigen.

FIG.1

Die Erfindung betrifft ein Verfahren und eine Vorrichtung zur Massenstrombestimmung eines Fördergutes nach dem Coriolis-Prinzip, insbesondere von Schüttgütern, gemäß den oberbegrifflichen Merkmalen des Patentanspruches 1.

Ein derartiges Verfahren und Vorrichtung zur Bestimmung des Durchflusses eines Massenstroms ist aus der DE 25 44 976 A1 bekannt. Hierbei soll insbesondere die Durchsatzmenge von Schüttgut der Eisenindustrie, wie Kalkstaub oder Feinerz ermittelt werden. Dies erfolgt durch die wirksame Trägheitskraft (Corioliskraft), welche bei der Koppelung eines bewegten Masseteilchens mit einem sich drehenden Bezugskörper auftritt. Die auftretende Änderung des Antriebsdrehmomentes wird hierbei als Meßgröße zur Ermittlung des Massenstromes herangezogen. Dabei wird der Massenstrom auf ein rotierendes Meßrad mit radialen Leitschaufeln gelenkt, wobei das Schüttgut im wesentlichen senkrecht zur Rotationsachse des Meßrades weggeschleudert wird. Das Drehmoment des mit etwa konstanter Drehzahl rotierenden Meßrades ändert sich entsprechend der Corioliskraft, wobei die Änderung des Antriebsdrehmoments zu der Masse des durchströmenden Materialstromes proportional ist. Zur Erfassung der Drehmomentänderung wird in dieser Druckschrift die Leistungsaufnahme des Antriebsmotors herangezogen, der das Meßrad antreibt.

Desweiteren sind prinzipiell ähnliche Meßverfahren bzw. Meßvorrichtungen aus der DE 33 46 145 A1 und der DE 39 40 576 A1 bekannt. Hierbei wird lediglich anstatt der Messung der Stromaufnahme des Antriebsmotors und zur Beseitigung der damit verbundenen Ungenauigkeiten der Antriebsmotor für das Meßrad im wesentlichen pendelnd bzw. schwenkbeweglich gelagert und das Reaktionsdrehmoment auf einen seitlich angeordneten Kraftaufnehmer geleitet.

Bei dieser Massenstrommessung nach dem Coriolis-Prinzip von pneumatisch gefördertem Schüttgut wird davon ausgegangen, daß die Masse der schweren Phase eines Massenstromes im Vergleich zu der Masse des im Massenstrom enthaltenen Gases, normalerweise Luft oder ein Fördergas, sehr groß ist, so daß die Gasmenge bei der Mengenbestimmung aus der Drehmomentänderung unbeachtet bleiben kann, wie dies in der DE 25 44 976 A1 erwähnt ist. Auch in der DE 33 46 145 A1 wird davon ausgegangen, daß das Meßergebnis durch die Förderluft nicht verfälscht wird. Jedoch sollte zur Kompensation des mitgeführten Luftstromes möglichst eine Luftrückleitung vorgesehen sein oder immer die gleiche Luftmenge gefördert werden, so daß die Meßverfälschungen minimiert werden. Desweiteren wird in dieser Druckschrift vorgeschlagen, eine Zellenradschleuse vorzusehen, so daß verhindert wird, daß ein unkontrollierter Luftstrom durch das Meßrad beschleunigt wird und das Meßergebnis beeinflussen könnte. Hierdurch wird jedoch der Bauaufwand vergrößert. Zudem eignet sich eine Zellenradschleuse nicht für verschiedenartige Fördergüter.

Diese Maßnahmen werden auch in der Beschreibung eines ähnlichen Massendurchflußmeßgerätes in Kochsiek: Handbuch des Wägens, S. 378 bis 380, Verlag Vieweg, 1988, vorgeschlagen. Auch hierbei wird darauf hingewiesen, daß Luftströmungen durch das Massendurchflußmeßgerät möglichst konstruktiv durch Einbau von Zellenschleusen, Zuführschnecken, Förderrinnen oder ähnlichen Einbauten verhindert werden sollen. Dies ist jedoch gerade für einen Einsatz in pneumatischen Förderanlagen nicht möglich.

Demzufolge besteht die Aufgabe der Erfindung darin, ein Verfahren und eine Vorrichtung zur Massenstrombestimmung anzugeben, das eine größere Meßgenauigkeit erzielt, einfach aufgebaut ist und möglichst universell für verschiedenartige Fördergüter einsetzbar ist.

Diese Aufgabe wird gelöst durch ein Verfahren mit den Merkmalen des Patentanspruches 1 bzw. durch eine Vorrichtung mit den Merkmalen des Patentanspruches 5.

Durch die hier vorgeschlagene Vorschaltung einer Förderfluid-Meßvorrichtung wird auch der Massenstrom des Fördergases bzw. der Förderflüssigkeit erfaßt, so daß die mitgeförderte Fluidmenge bei der Massenbestimmung mitberücksichtigt wird. Da insbesondere bei hohen Förderleistungen, wie sie im Interesse eines hohen Durchsatzes angestrebt werden, die Fördergase bzw. - flüssigkeiten nicht mehr vernachlässigt werden, ergibt sich eine bedeutend höhere Meßgenauigkeit. Zudem läßt sich die vorgeschlagene Vorrichtung zur Massenstrombestimmung problemlos in bestehende pneumatische Förderanlagen einbauen, wobei durch die hier vorgeschlagene zusätzliche Förderfluid-Meßvorrichtung zugleich eine Erhöhung der Förderleistung erreicht werden kann, da das Meßrad zugleich als Fördergebläse ausgebildet sein kann. Diese Vorrichtung läßt sich in nahezu jedem beliebigen Winkel zwischen einer horizontalen Lage oder einer vertikalen Anordnung installieren, so daß sie sich insbesondere in jede Schüttgut-Förderanlage einbauen läßt. Von besonderem Vorteil ist auch, daß durch die Wirkung des Meßrades bzw. Förderrades zugleich als Gebläse über dessen Drehzahländerung die Förderstärke variiert bzw. eingeregelt werden kann.

Weitere vorteilhafte Ausgestaltungen sind Gegenstand der Unteransprüche.

Nachfolgend wird die Erfindung anhand mehrerer Ausführungsbeispiele näher erläutert und beschrieben. Es zeigen:

Fig. 1     eine schematische Darstellung eines ersten Ausführungsbeispiels der vorgeschlagenen Vorrichtung zur Massenstrombestimmung;

Fig. 2 eine abgewandelte Ausführungsform gemäß Fig. 1.

Fig. 3 eine vergrößerte Darstellung einer Einzel-Meßvorrichtung aus Fig. 2;

Fig. 4 ein drittes Ausführungsbeispiel in der Anwendung mit einem Dosierrotor als Beschickungsvorrichtung;

Fig. 5 ein viertes Ausführungsbeispiel in der Verwendung zusammen mit einer Fließbettschleuse;

Fig. 6 eine fünfte Ausführungsform in einer horizontalen Anordnung;

Fig. 7 eine sechste Ausführungsform in Anwendung in einer Saugförderanlage;

Fig. 8 ein siebtes Ausführungsbeispiel mit einer extern angeordneten Antriebsvorrichtung und Drehmoment-Meßvorrichtung mit zwei zugehörigen Schnittdarstellungen;

Fig. 9 ein achtes Ausführungsbeispiel mit zwei zueinander parallel angeordneten Einzel-Meßvorrichtungen;

Fig. 10 ein vereinfachtes Ausführungsbeispiel gemäß Fig. 4; und

Fig. 11 eine weitere Ausführungsform mit integriertem Antrieb.

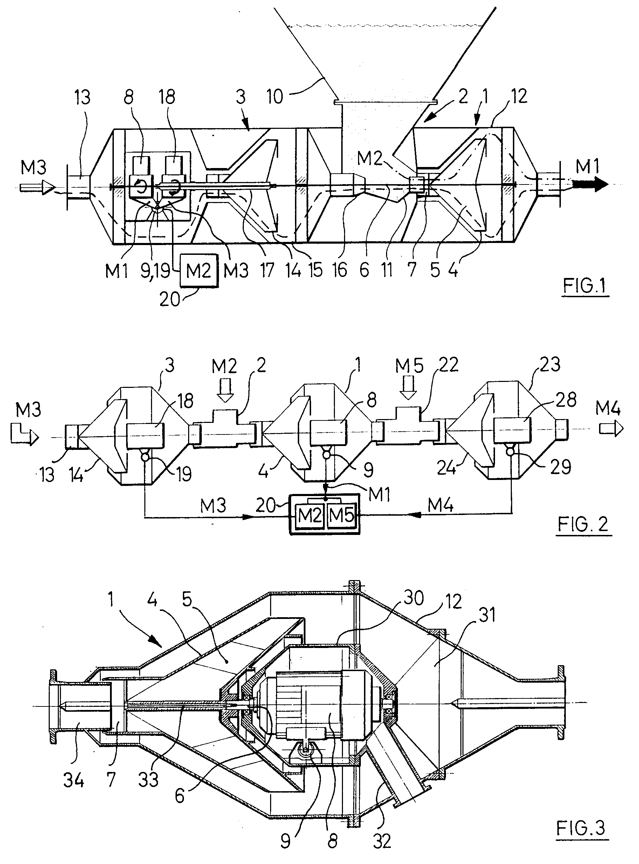

In Fig. 1 ist die vorgeschlagene Vorrichtung zur Massenstrombestimmung schematisch dargestellt. Diese besteht im wesentlichen aus einer an sich bekannten Massenstrom-Meßvorrichtung 1, einer Beschickungsvorrichtung 2 und einer nun vorgeschlagenen zusätzlichen Förderfluid-Meßvorrichtung 3. Die Massenstrom-Meßvorrichtung 1 besteht im wesentlichen aus einem Meßrad 4, das Leitschaufeln 5 zur radialen Umlenkung des Massenstromes $M2$ aus der Beschickungsvorrichtung 2 trägt. Durch die Leitschaufeln 5 wird dem einströmenden Massenstrom eine bestimmte Winkelgeschwindigkeit aufgeprägt. Die dazu erforderliche Kraft ist zu dem Massenstrom direkt proportional. Die Zuführung des Schüttgutstromes $M2$ aus der Beschickungsvorrichtung 2 zum Meßrad 4 erfolgt dabei in einem zentralen Zuführbereich 7. Nach der Umlenkung wird das Schüttgut durch die Leitschaufeln 5 mit der Winkelgeschwindigkeit des rotierenden Meßrades 4 erfaßt und durch Zentrifugalkräfte beschleunigt nach außen geführt. Die Schüttgutpartikel verlassen allseitig das Meßrad 4 an der Abwurfkante der Leitschaufeln 5. Die Coriolis-Beschleunigung, die bei der Bewegung der Schüttgutteilchen entlang der Leitschaufeln 5 auftritt, hat ein Reaktions- oder Bremsmoment auf das Meßrad 4 zur Folge, was hier als Meßeffekt ausgenutzt wird. Hierbei wird der Gesamtmassenstrom $M1$, der sich aus dem Fördergut- bzw. hier Schüttgut-Massenstrom $M2$ und dem Luft-Massenstrom $M3$ zusammensetzt, erfaßt.

Das Meßrad 4 ist über eine Welle 6 mit einem Antriebsmotor 8 verbunden, der pendelnd gelagert ist und sich bei Änderung des Antriebsdrehmomentes proportional zur Durchsatzmenge gegen eine mit Abstand von der Welle 6 befestigte Kraftmeßzelle 9 abstützt. Hierdurch wird somit das jeweils erforderliche Antriebsdrehmoment für das Meßrad 4, das sich direkt proportional zum Massendurchsatz ändert, erfaßt. Aufgrund dieser strengen Proportionalität wird in den Zeichnungen der Buchstabe M sowohl für den jeweiligen Massenstrom $M1$, $M2$, $M3$... als auch für das zugehörige gemessene Moment $M1$, $M2$, $M3$... verwendet.

Der zu messende, in der oberen Hälfte strichpunktiert eingezeichnete Schüttgutstrom $M2$ wird durch die Beschickungsvorrichtung 2, hier in einfacher Weise lediglich ein Zuführtrichter 10 durch eine Art Injektor 11 in den zentralen Zuführbereich 7 des Meßrades 4 geleitet und verläßt dieses nach radialer Umlenkung durch die Leitschaufeln 5, wobei ein das Meßrad 4 umgebendes Gehäuse 12 den Massenstrom zusammenfaßt und an eine sich anschließende Förderleitung oder einen Schüttgutauslauf weiterleitet.

Die Ausführungsbeispiele werden in vereinfachter Weise anhand eines Schüttgutstromes als Beispiel für ein Fördergut beschrieben. Als Beispiel für ein Förderfluid dient hier wie auch allgemein in der Verwendung der vorgeschlagenen Vorrichtung Luft. Jedoch ist das vorgeschlagene Verfahren und die Vorrichtung auf alle fließfähigen Komponenten gleicher oder verschiedener Zusammensetzung und gleicher oder verschiedener Aggregatszustände anzuwenden. Als fließfähiges Fördergut dienen hierbei insbesondere fließfähige, feinkörnige Feststoffe wie Sand, Getreide, Mehl, Pulver oder Granulat jeglicher Art. Als Förderfluid kommen insbesondere Gase und hierbei wiederum Luft in Betracht, jedoch können hierzu auch Flüssigkeiten oder Gas/Flüssigkeitsgemische Verwendung finden. Somit eignet sich die vorgeschlagene Vorrichtung und das Verfahren zur Massenstrombestimmung vorzugsweise von heterogenen Mehrstoffgemischen, jedoch auch von Gemischen mit homogener Zusammensetzung. Zudem sei darauf hingewiesen, daß neben der Massenstrombestimmung durch Integration auch die Gesamtmasse in einer bestimmten Zeiteinheit durch entsprechende, an sich bekannte Auswertung festgestellt werden kann.

Neuerungsgemäß ist nun zusätzlich zu der Massenstrom-Meßvorrichtung 1 zur Erfassung des Gesamtmassenstroms $M1$ eine Luftstrom-Meßvorrichtung 3 für die Messung des Luftmassenstroms $M3$ vorgesehen, die im wesentlichen aus einem Lufteintritt 13, einem Flügelrad 14 zur Beschleunigung des Fördergases und einem Gehäuse 15, ggfs. mit einem nicht näher dargestellten Leitrad zur Gleichrichtung des in der unteren Hälfte strichliert dargestellten Luftstroms M3 besteht. Im Zentrum des Gehäuses 15 ist eine Austrittsöffnung 16 für den Luftstrom M3 vorgesehen, der hierdurch das sich im Zuführtrichter 10 befindliche Schüttgut als Schüttgutstrom M2 mitreißt und über den Injektor 11 in den zentralen Zuführbereich 7 der Massenstrom-Meßvorrichtung 1 leitet. Das Flügelrad 14 zur Beschleunigung und Messung des Förderluftstromes M3 ist über eine die erste Welle 6 teilweise umgreifende und unabhängig gelagerte Welle 17 mit einem zweiten Antriebsmotor 18 verbunden, der ebenfalls pendelnd gelagert ist und sich über eine Kraftmeßzelle 19 abstützt. Hierdurch wird über die Reaktions- oder Bremsmomentmessung der durchströmende Fördergasstrom als Meßwert M3 zuverlässig erfaßt. An der anderen Kraftmeßzelle 9 wird dagegen ein Meßwert M1 erhalten, der dem durch die Meßvorrichtung 1 strömenden Gesamtmassenstrom M1 als der Summe aus dem Schüttgut-Massenstrom M2 und dem Fördergas-Massenstrom M3 proportional ist. An der Kraftmeßzelle 19 wird dagegen nur die Masse der Förderluft bzw. des Förderfluids als Meßwert M3 erfaßt. Durch die Differenzbildung (M1 - M3) in einem Auswertegerät 20 zwischen den Meßwerten der Kraftmeßzelle 9 und der Krafmeßzelle 19 wird somit die Masse bzw. die Durchflußmenge des Fördergutes allein als Meßwert M2 erfaßt, da durch diese Anordnung der insbesondere bei hohen Förderleistungen störende Lufteinfluß subtrahiert wird. Durch diese Art Tara-Wägung zwischen dem Fördergasstrom (Meßwert M3) an der Meßvorrichtung 3 und der Gesamt-Massenstromerfassung der Förderluft zusammen mit dem Schüttgutstrom an der Massenstrom-Meßvorrichtung 1 (Meßwert M1) wird somit der störende Einfluß der Fördergasmasse eliminiert, da das Differenzmoment M2 für den zu messenden Schüttgut-Massenstrom aus (M1 - M3) gebildet wird.

Hierbei ist in Fig. 1 eine besonders vorteilhafte Lösung dargestellt, wobei die beiden Meßvorrichtungen 1 und 3 gegensinnig umlaufen, so daß gegeneinander gerichtete Drehmomente M1 und M3 als Maß für die Massenströme M1 und M3 vorhanden sind, wie dies durch die Pfeile angedeutet ist. Dabei wirken beide pendelnd aufgehängte Antriebsmotoren 8 und 18 auf eine einzige Kraftmeßzelle, so daß sich das Differenzmoment M2 direkt an der Kraftmeßzelle 9 ergibt und an dem Auswertegerät 20 als Massenstrom abgelesen bzw. für eine weitere manuelle Steuerung oder automatische Regelung weiterverwendet werden kann. Wenn der abgelesene Massenstrom M2 des Fördergutes z. B. für eine bestimmte Zudosierung zu klein ist, kann die Drehzahl der Meßvorrichtung 1 bzw. des Meßrades 4 gesteigert werden, so daß die Absaugmenge M2 aus dem Injektor 11 ansteigt. Alternativ oder ergänzend kann auch die Drehzahl des Förderrades 14 gesteigert werden, so daß über die höhere Luftmenge, genauer dem höheren Luftmassenstrom M3 ein größerer Schüttgutstrom M2 in den Injektor 11 mitgerissen wird.

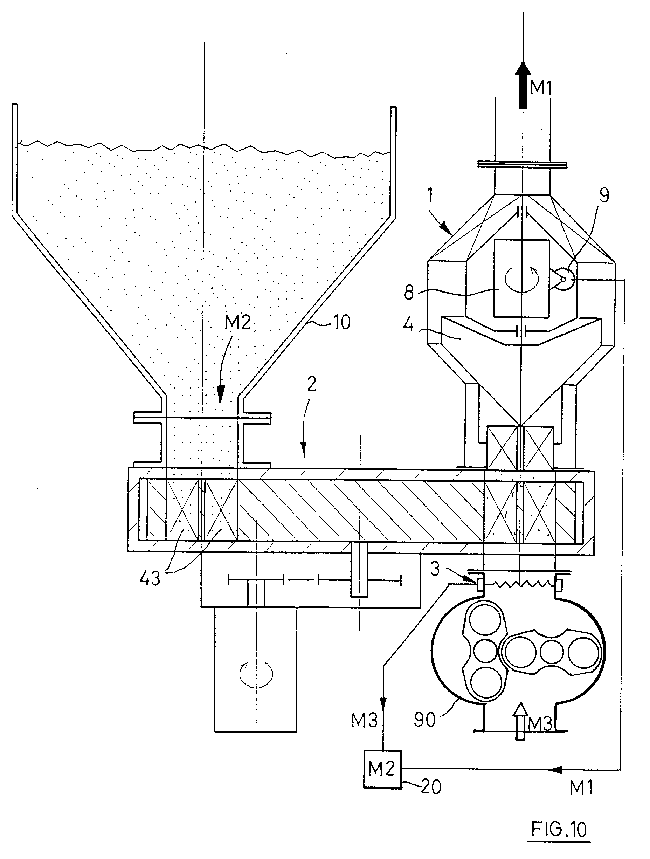

Es sei darauf hingewiesen, daß die Förderfluid-Meßvorrichtung 3 auch durch einen Kompressor gebildet sein kann, dessen Antriebsdrehmoment erfaßt wird und proportional zu der durchströmten Fördergasmenge M3 ist, wie dies in Fig. 10 näher erläutert wird. Auch der Drehmomentabgriff an der Fördergasstrom-Meßvorrichtung 3 und der Massenstrom-Meßvorrichtung 1 für die entsprechenden Meßwerte M3 und M1 kann abweichend von der hier dargestellten Drehmoment-Meßvorrichtung 9, 19 mit einem verdrehbar gelagerten Motor, der zugleich den Hebel für eine Kraftmeßzelle bildet, anders gestaltet sein, beispielsweise durch eine entsprechend genaue Messung der Stromaufnahme der Antriebsmotoren 8 und 18 ersetzt sein.

Als Beschickungsvorrichtung 2 können anstatt des Zuführtrichters 10 auch Zellenradschleusen oder Förderschnecken oder ähnliche Dosiervorrichtungen vorgesehen sein, wie dies in den nachfolgenden Ausführungsbeispielen gezeigt ist.

In Fig. 2 ist eine abgewandelte Ausführungsform dargestellt, wobei gegenüber der Ausführung in Fig. 1 noch eine weitere Meßvorrichtung 23 unter Zwischenschaltung einer weiteren Beschickungsvorrichtung 22 in Art einer Reihenschaltung angeschlossen ist. Die Meßvorrichtung 23 weist mit ihren Hauptbestandteilen, nämlich einem Meßrad 24, einem Antriebsmotor 28 und einer Drehmoment-Meßvorrichtung 29 im wesentlichen den gleichen Aufbau auf, wobei jedoch die Antriebsmotoren im Gegensatz zu der Ausführung in Fig. 1 in unmittelbarer Nähe zu den Meß- bzw. Flügelrädern 4, 14 und 24 angeordnet sind. An der Beschickungsvorrichtung 22 kann somit eine weitere Fördergut-Komponente M5 zugegeben werden, wie dies bei Granulatmischungen häufiger erforderlich ist. Es können jedoch auch beispielsweise am Lufteintritt 13 eine Gaskomponente, an der Beschickungsvorrichtung 2 eine Flüssigkeitskomponente und an der Beschickungsvorrichtung 22 eine Feststoffkomponente aufgegeben werden. Proportional zu dem Massendurchfluß wird die jeweilige Coriolis-Kraft als Reaktionsdrehmoment an den Kraftmeßzellen 9, 19 und 29 erfaßt und an die Auswerteeinheit als Meßsignale M1, M3 und M4 weitergegeben. Aus den Meßwerten M3 und M1 wird, wie oben beschrieben, das Differenzmoment M2 gebildet, das direkt proportional zu dem Massenstrom M2 der an der Beschickungsvorrichtung 2 zugefügten Komponente ist. Entsprechendes gilt für den Massenstrom M5 der Komponente, die an der Beschickungsvorrichtung 22 hinzugefügt wird, wobei hier das Differenzmoment M5 aus dem an der Meßvorrichtung 23 gemessenen Gesamtmassenstrom entsprechend dem Meßwert M4 und dem der Meßvorrichtung 1 festgestellten Meßwert M1 gebildet wird. Die hier dargestellte Anordnung von drei Meßvorrichtungen läßt auf eine Vielzahl erweitern, so daß beliebig viele Komponenten für Dosierungen gemessen werden können.

In Fig. 3 ist eine der drei hintereinandergeschalteten Meßvorrichtungen aus Fig. 2 vergrößert dargestellt, hier die mittlere Meßvorrichtung 1. Jedoch können die beiden vor- bzw. nachgeschalteten Meßvorrichtungen 3 und 23 exakt den gleichen Aufbau aufweisen, so daß eine Herstellung in Modulbauweise möglich ist. Gegenüber der Meßvorrichtung in Fig. 1 ist hier der Antriebsmotor 8 in unmittelbarer Nähe zum Meßrad 4 angeordnet. Die übrigen Bezugzeichen für funktionsgleiche Teile entsprechen denen aus Fig. 1. Wie ersichtlich, ist der Antriebsmotor 8 in einem Zwischengehäuse 30 verdrehbar gelagert, so daß sich dessen Gehäuse bei Auftreten der Coriolis-Kraft im Meßbetrieb gegen die Kraftmeßzelle 9 abstützt und somit das zum jeweils durchströmenden Massenstrom proportionale Bremsdrehmoment erfaßt. Das Zwischengehäuse 30 ist über Rippen 31 drehfest mit dem Gehäuse 12 verbunden. Aus dem Zwischengehäuse 30 führt ein Rohr 32 heraus, das der Abluftführung des Antriebsmotors 8 dient, sowie die Stromversorgungskabel und die Datenleitungen von der Kraftmeßzelle 9 aufnehmen kann. Das Meßrad 4 mit bis zu dem Zuführbereich 7 reichenden radialen Leitschaufeln 5 ist über einen Zuganker 33 auf der Motorwelle des Antriebsmotors 8 befestigt. Vor dem Zuführbereich ist zur Vermeidung eines Dralls ein Strömungsgleichrichter 34 vorgesehen. Das Meßrad 4 ist in Durchflußrichtung gepfeilt ausgebildet, so daß sich eine aerodynamisch günstige Weiterleitung des Schüttgut- und Luftstromes bei pneumatischer Förderung ergibt. Der Pfeilwinkel des Meßrades 4 ist dabei so gewählt, daß je nach Dichte des geförderten Gutes dieses möglichst ohne Berührung an den Außen- und Innenflächen nach außen gefördert wird. Hierzu sind die dem Zuführbereich 7 zugewandten Enden der Leitschaufeln 5 in Umlaufrichtung umgebogen oder abgekantet, so daß den zugeführten Fördergutpartikeln sofort beim Eintritt in das Meßrad 4 eine Radialbeschleunigung erteilt wird und diese möglichst stoßfrei die Winkelgeschwindigkeit des Meßrades 4 annehmen. Hierdurch wird gegenüber den sonst üblichen Meßrädern mit ausschließlich radialer Förderkomponente der Verschleiß am Meßrad 4 und insbesondere an der zum Antriebsmotor 8 hingewandten Meßradscheibe, insbesondere bei abrasivem Fördergut wie korundhaltiger Flugasche, beträchtlich verringert. Auch die Rippen 31 können als Gleichrichter ausgebildet sein, so daß sich eine möglichst reibungsarme Durchströmung der Meßvorrichtung 1 ergibt. Auch das Rohr 32 ist hierbei in Durchflußrichtung oval oder mit einem tropfenförmigen Querschnitt versehen. Durch die pfeilförmige Gestaltung des Meßrades 4 ergibt sich zudem eine kompakte Bauform, so daß die Meßvorrichtung insbesondere in pneumatischen Förderanlagen leicht einzubauen ist. Dies wird beispielhaft an den nachfolgenden Figuren gezeigt.

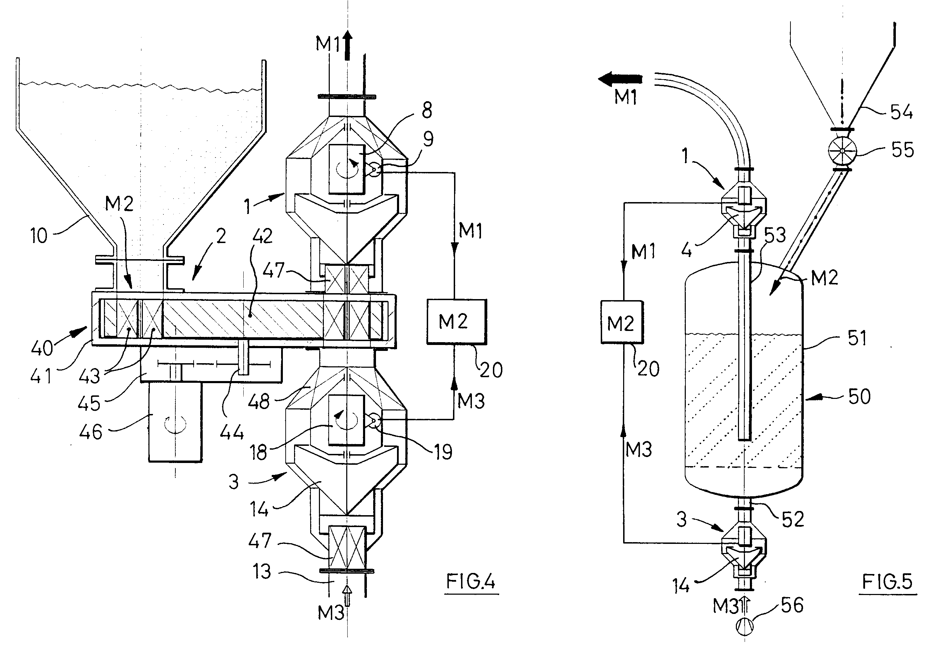

Fig. 4 zeigt eine dritte Ausführungsform, die ebenso wie die Ausführungsform in Fig. 1 zwei Meßvorrichtungen 1 und 3 aufweist, die jedoch hier in vertikaler Anordnung vorgesehen sind. Als dazwischengeschaltete Beschickungsvorrichtung 2 ist eine Durchblasschleuse 40 an der Unterseite eines Zuführtrichters 10, z. B. aus einem Silo vorgesehen. Die Durchblasschleuse 40 weist einen Dosierrotor 42 auf, der in einem geschlossenen Gehäuse 41 um eine Antriebswelle 44 umläuft. Der Dosierrotor 42 wird von einem Getriebe 45 und einem Antriebsmotor 46 angetrieben, wobei am Außenumfang des Dosierrotors 42 angeordnete Fördertaschen 43 an der Aufgabeöffnung unter dem Zuführtrichter 10 vorbeilaufen und an der entgegengesetzten Seite nach einer Drehung um etwa 180° durch am Luftzutritt 13 zugeführte Förderluft ausgeblasen werden. Die Masse M3 der Förderluft wird in der oben beschriebenen Weise durch Messung des auf das Förderrad 14 wirkenden Reaktionsmomentes M3, das an der Kraftmeßzelle 19 festgestellt wird, erfaßt. An der oberen Meßvorrichtung 1 wird der Gesamtmassenstrom M1 des aus dem Zuführtrichter 10 abgezogenen Fördergutes M2 zusammen mit dem am Lufteintritt 13 eintretenden Fördergas M3 erfaßt. Durch die Differenzbildung zwischen den an den Kraftmeßzellen 9 und 19 festgestellten Momenten (M1 minus M3) wird das der Masse des zugeführten Fördergutes proportionale Differenzmoment M2 gebildet. Zu einer möglichst störungsfreien Durchströmung der Meßanordnung sind jeweils vor und nach dem Förderrad 14 und Meßrad 4 Gleichrichter 47 und 48 vorgesehen, so daß eine nahezu drallfreie Durchströmung erzielt wird.

Es sei darauf hingewiesen, daß das Förderrad 14 hierbei nicht nur der Messung der Coriolis-Kraft dient, sondern zugleich der Erzeugung des Luftstromes für die Förderung in vertikaler Richtung dient. Die Förder- oder Gebläsewirkung des Förderrads 14 reicht für geringere Förderhöhen und leichtes Fördergut dabei vollständig aus. Ergänzend hierzu kann auch am Lufteintritt 13 ein zusätzliches Gebläse vorgesehen sein.

In Fig. 5 ist ein weiteres Ausführungsbeispiel dargestellt, wobei wiederum zwei Meßvorrichtungen 1 und 3 an einer Fließbettschleuse 50 angewendet werden. Die Fließbettschleuse 50 besteht im wesentlichen aus einem hermetisch geschlossenen Druckgefäß 51, in das von der Unterseite 52 Druckluft zur Fluidisierung und Auflockerung des im Druckgefäß befindlichen Fördergutes eingeleitet wird. Die Masse M3 der eingeleiteten Druckluft wird hierbei durch die Meßvorrichtung 3 erfaßt. Wie oben angedeutet, kann zur Unterstützung der Förderwirkung des Förderrades 14 ein Kompressor oder ein Gebläse 56 vorgeschaltet werden. Das Fördergut gelangt aus dem Druckgefäß 51 über eine Förderleitung 53 zu der Meßvorrichtung 1, die somit wiederum den Gesamtmassenstrom M1 aus dem Fördergut-Massenstrom M2 und dem Förderfluid-Massenstrom M3, hier der Druckluft erfaßt. Hierbei kann das Meßrad 4 der Meßvorrichtung 1 in vorteilhafter Weise zusätzlich zu der Drucklufteinblasung an der Unterseite 52 zur Ansaugung des Fördergutes dienen. Zur Nachfüllung des Druckgefäßes 51 ist ein Schüttgut-Bunker 54 vorgesehen, dessen Entleermenge über eine Zellenradschleuse 55 so gesteuert wird, daß die Schütthöhe des Fördergutes in dem Druckgefäß 51 in etwa konstant bleibt. Die Zellenradschleuse 55 ist hierbei so ausgeführt, daß eine möglichst gute Abdichtung gegenüber Leckluft erreicht wird, so daß die in das Druckgefäß 51 einfließende Luftmenge M3 und der das Druckgefäß 51 verlassende Gesamtmassenstrom M1 aus Fördergut und Förderfluid ohne Leckluft exakt zu bestimmen ist. Aus diesen Meßwerten wird dann durch Differenzbildung (M1 - M3) der Fördergut-Massenstrom M2 im Auswertegerät 20 bestimmt.

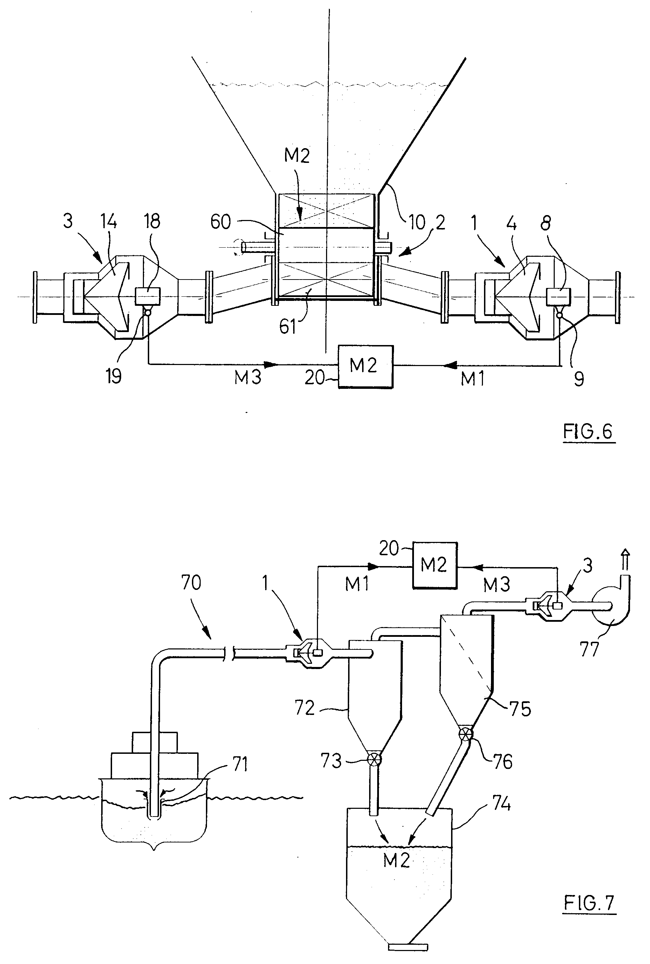

In Fig. 6 ist ein fünftes Ausführungsbeispiel dargestellt, das einen ähnlichen Aufbau wie in Fig. 4 aufweist, jedoch hier im wesentlichen horizontal angeordnet ist. Als Beschickungsvorrichtung 2 zwischen der Meßanordnung 1 für den Gesamtmassenstrom M1 und der Meßanordnung 3 für den Zuluft-Massenstrom M3 ist eine um eine horizontale Achse umlaufende Dosierwalze 60 vorgesehen. Die Dosierwalze 60 weist an ihrem Außenumfang Vertiefungen 61 auf, die nach der Mitnahme des Fördergutes aus dem Zuführtrichter 10 nach unten laufen und dort von der durch die Meßvorrichtung 3 eintretenden Förderluft nach rechts zu der Meßvorrichtung 1 transportiert werden. Dort wird, wie oben beschrieben, an einer Kraftmeßzelle 9 wiederum das dem Gesamtmassenstrom M1 aus Fördergut und Förderluft proportionale Moment gemessen und dem Auswertegerät 20 zugeleitet. Dort wird das dem Massenstrom der Förderluft proportionale Reaktionsmoment M3, das von der Kraftmeßzelle 19 erfaßt wurde, subtrahiert, so daß der Massenstrom M2 des Fördergutes ohne das Fehlermoment des Förderfluids erhalten wird.

In Fig. 7 ist in einem sechsten Ausführungsbeispiel quasi die Umkehrung der bisherigen Ausführungsbeispiele in der Anwendung bei einer Saugförderanlage 70 dargestellt. Mit einer Saugdüse 71 wird das punktiert dargestellte Fördergut aus einem Schiffskörper abgesaugt, wobei an der Saugdüse 71 erhebliche Luftmengen eingesaugt werden. Das Fördergut-Förderluft-Gemisch passiert zunächst die Meßvorrichtung 1, die somit den Gesamtmassenstrom M1 des Fördergutes mit dem Förderfluid feststellt. Das Fördergut wird in einem Zyklonabscheider 72 weitgehend aus dem angesaugten Fördergut-Förderfluid-Gemisch abgetrennt und über eine Zellenradschleuse 73 einem Silo 74 zugeführt. Die Zellenradschleuse 73 dient dabei der Abdichtung der gesamten Sauganlage. Vom Zyklonabscheider 72 gelangt das nur noch geringe Mengen Fördergut enthaltende Gemisch in einen Filter 75, wobei wiederum ein hoher Prozentsatz des Fördergutes abgeschieden wird und über eine Zellenradschleuse 76 dem Silo zugeführt wird. Die Förderluft gelangt vom Filter 75 aus über die Meßvorrichtung 3 zu dem Sauggebläse 77, das im wesentlichen die gesamte Saugförderanlage 70 betreibt. In der Meßvorrichtung 3 wird somit der Massenstrom M3 der Förderluft und darin verbliebener Feinstäube festgestellt.

Wesentlich ist hierbei, daß auch Feinstäube, die im Filter 75 nicht abgetrennt wurden, jedoch in der Massenberechnung einen erheblichen Anteil einnehmen, miterfaßt werden. Bei der Differenzbildung (M1 - M3) in dem Auswertegerät 20 zwischen den Meßwerten der Meßvorrichtungen 1 und 3 wird somit als Differenzmoment bzw. Differenzmassenstrom exakt das zum Silo 74 hin abgetrennte Fördergut M2 erfaßt. Somit gehen nicht abgetrennte Komponenten wie Feinstäube und die Luftmasse nicht als Fehlerquellen in die Massenberechnung für das sich letztendlich im Silo 74 befindliche Fördergut ein. Da gerade bei derartigen Saugförderanlagen erhebliche Luftmengen bzw. Luftmassen zur Förderung des Fördergutes erforderlich sind, können somit Meßungenauigkeiten von mehreren Prozenten ausgeschaltet werden.

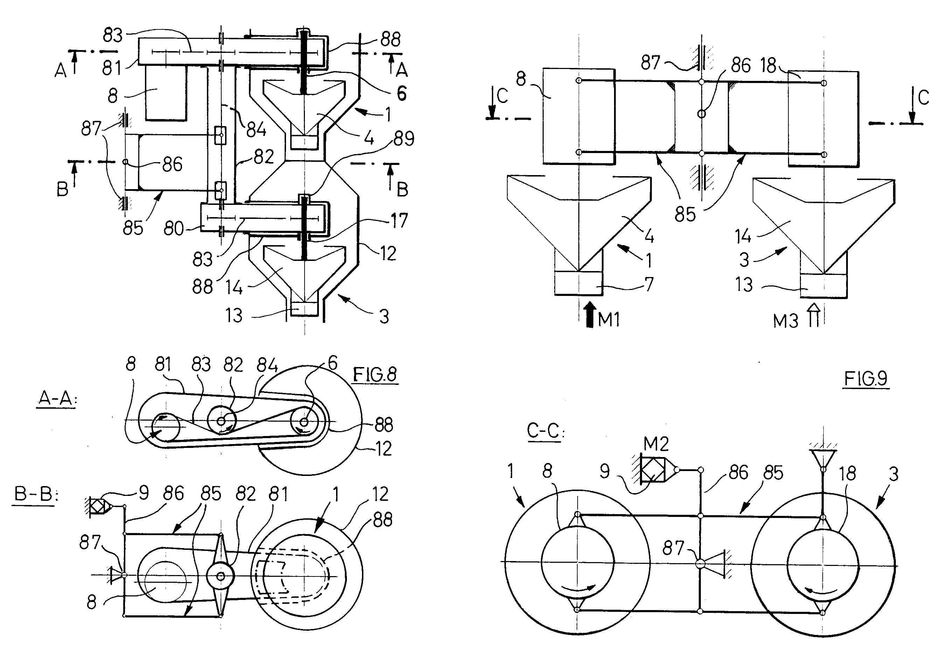

In Fig. 8 ist ein weiteres Ausführungsbeispiel von in Reihe geschalteten, hier nur schematisch dargestellten Meßvorrichtungen 1 und 3 dargestellt. Hierbei ist wesentlich, daß beide Meß- bzw. Förderräder 4 und 14 von einem einzigen Motor 8 angetrieben werden. Hierdurch läßt sich neben der Einsparung des zweiten Antriebsmotors 18 ein exakter Synchronlauf und damit exakt die gleiche Drehzahl der beiden Meßrotoren 4 und 14 erreichen. Hierdurch läßt sich auch die Drehzahl beider Meßräder 4 und 14 zur Steuerung der Durchflußmenge regulieren. Dies hat beispielsweise den Vorteil, daß bei einem Injektor oder einem Saugheber als Beschickungsvorrichtung die der gestiegenen Gasmenge proportionale Schüttgutmenge ohne zusätzliches Stellglied geregelt werden kann. Von Bedeutung bei diesem Ausführungsbeispiel ist weiterhin, daß die Drehmomentmessung hier außerhalb des Gehäuses 12 und damit außerhalb des Durchflußweges des Fördergutes und des Förderfluids erfolgt. Dies ist insbesondere bei aggressiven Komponenten von Vorteil. Die Meßräder 4 und 14 sind hierbei an Auslegerarmen 80 und 81 gelagert, die über ein Zwischenrohr 82 verbunden sind. Letzteres und die Ausleger 80 und 81 nehmen ein Getriebe, vorzugsweise zwei Riementriebe 83 mit einer Zwischenwelle 84 staubdicht auf. Die Auslegerarme 80 und 81 ragen hierbei in geschlossene Einbuchtungen 88 des Gehäuses 12, die erstere mit geringem Spiel umgeben. Hierdurch können sich die Auslegerarme 80 und 81 als einziger Freiheitsgrad an Schwenklagern 89 um die Wellen 6 und 17 der Meßräder 4 und 14 geringfügig verdrehen und somit Drehmomentänderungen weitergeben. Wie aus dem zugehörigen Querschnitt entlang der Schnittlinie A-A durch den Ausleger 81 ersichtlich ist, wird über die Zwischenwelle 84 eine Drehrichtungsumkehr erreicht, so daß die beiden Meßräder 4 und 14 gegensinnig umlaufen. An dem Zwischenrohr 82 ist ein Parallelogrammlenkergestänge 85 befestigt, das über einen vertikalen Lenker 86 die zur Drehmomentmessung vorgesehene Kraftmeßzelle 9 beaufschlagt, wie dies aus der Schnittdarstellung gemäß der Schnittlinie B-B ersichtlich ist. Das Parallelogrammgestänge 85 ist dabei so ausgeführt, daß das Zwischenrohr 82 statisch bestimmt und gefesselt ist. Der Lenker 86 ist zur Abstützung an einem Abstützpunkt 87 an z. B. besonders reibungsarmen Kreuzfedergelenken ortsfest gelagert. Aufgrund der gegensinnigen Drehrichtung der Meßräder 4 und 14 ergibt sich die Verlagerung des Lenkergestänges 85 und damit der Beaufschlagung der Kraftmeßzelle 9 (vgl. zugehöriger Schnitt B-B) proportional dem Differenzmoment zwischen den Meßvorrichtungen 1 und 3. Dieses Differenzmoment ist wiederum dem Massenstrom des Fördergutes proportional, so daß sich bei entsprechener Eichung der Kraftmeßzelle 9 unter Berücksichtigung der Hebellänge 86 der Massenstrom des Fördergutes ohne den Fehlereinfluß der Förderluft direkt feststellen läßt. Hierbei ist besonders vorteilhaft, daß das Lenkergestänge 85 beträchtlich reibungsärmer als eine Wälzlagerung ist und zudem auch die Schwenklager 89 durch die Anbringung direkt auf den Wellen 6 und 17 leicht auf Drehmomentenänderungen ansprechen. In der Schnittdarstellung B-B ist zudem strichpunktiert ein Durchbruch in dem Auslegerarm 81 und der Ausbuchtung 88 angedeutet, so daß abgeschleudertes Fördergut hier durchtreten kann, sofern der Riementrieb 83 ganz außen am Auslegerarm 81 verläuft und gekapselt ist.

In Fig. 9 ist eine ähnliche Ausführungsform wie in Fig. 8 gezeigt, jedoch sind hier die Meßvorrichtungen 1 und 3 mit ihren Meßrädern 4 und 14 anstatt in Reihe geschaltet parallel zueinander angeordnet. Zudem ist für jede Meßvorrichtung ein gesonderter Antriebsmotor 8 bzw. 18 vorgesehen. Durch die parallele Anordnung nebeneinander kann der Drehmomentabgriff über ein doppelseitiges Parallelogrammlenkergestänge 85 erfolgen, das wiederum an einem Abstützpunkt 87 gelagert ist und über einen vertikalen Lenker 86 auf die Kraftmeßzelle 9 wirkt. Durch diese Anordnung wird wiederum an der Kraftmeßzelle 9 ein dem Differenzmoment (M1 - M3) proportionaler Meßwert abgegriffen. Diese Anordnung eignet sich z. B. auch für die Saugförderanlage 70 in Fig. 7, indem die dortigen Meßvorrichtungen 1 und 3 durch entsprechende Förderleitungsführung nebeneinander angeordnet werden können. Durch das doppelseitige Parallelogrammgestänge, wie dies insbesondere in der zu Fig. 9 gehörigen Schnittdarstellung entlang der Schnittlinie C-C dargestellt ist, ist somit nur noch ein sehr einfaches Auswertegerät 20 erforderlich, da die Differenzbildung bereits durch die gegenseitige Anordnung an dem Parallelogrammgestänge 85 vorgenommen wird. Entsprechend der Saugförderanlage 70 in Fig. 7 könnte beispielsweise in der linken Meßvorrichtung 1 die Gesamtmenge M1 des Fördergutes zusammen mit dem Förderfluid hindurchgefördert werden, während an der rechten Meßvorrichtung 3 die abgeleitete Luft M3 zusammen mit Feinstaub nach dem Filter 75 hindurchgeleitet werden. Obwohl hier beide Meßvorrichtungen die gleiche Durchflußrichtung aufweisen, könnte eine der Meßvorrichtungen auch in entgegengesetzter Richtung fördern, beispielsweise durch eine spiegelbildliche Anordnung entlang der Schnittlinie C-C.

In Fig. 10 ist ein vereinfachtes Ausführungsbeispiel dargestellt, das sich von dem Ausführungsbeispiel in Fig. 4 im wesentlichen dadurch unterscheidet, daß die Meßvorrichtung 3 für das Förderfluid nicht durch ein Coriolis-Meßrad mit Drehmomentabgriff gebildet ist, sondern an einem Drehkolbengebläse 90 der Massenstrom des Förderfluids durch einen hier schematisch dargestellten Hitzdraht-Luftmengen- bzw. -Luftmassenmesser als Meßvorrichtung 3 vorgesehen ist. Als Meßgröße für den Luftmassenstrom kann auch das Antriebsdrehmoment für das Drehkolbengebläse abgegriffen werden oder auch eine entsprechende Stauklappe oder ähnliche, aus dem Kraftfahrzeug für die Ansaugluftmessung bekannte Luftmengenmesser verwendet werden. Ebenso kann eine Staudruckmessung zur Erfassung des Luftförder-Massenstroms M3 durchgeführt werden. Anstatt dem Drehkolbengebläse 90 kann natürlich auch, je nach gefordertem Förderdruck, ein Schraubenverdichter oder ein Radialgebläse vorgesehen sein. Die Meßwerte der Meßvorrichtung 3 werden dem Auswertegerät 20 zugeleitet und dort in eine dem Massenstrom proportionale Meßgröße umgewandelt. Zusammen mit dem Meßwert der Kraftmeßzelle 9 als direktes Maß für den Massenstrom des Fördergutes aus dem Zuführtrichter 10 zusammen mit der Förderluft wird wiederum der Differenzwert aus M1 - M3 gebildet, so daß der Netto-Massenstrom M2 des Fördergutes allein, ohne den Fehlereinfluß der zusätzlichen Förderluftmasse bestimmt wird.

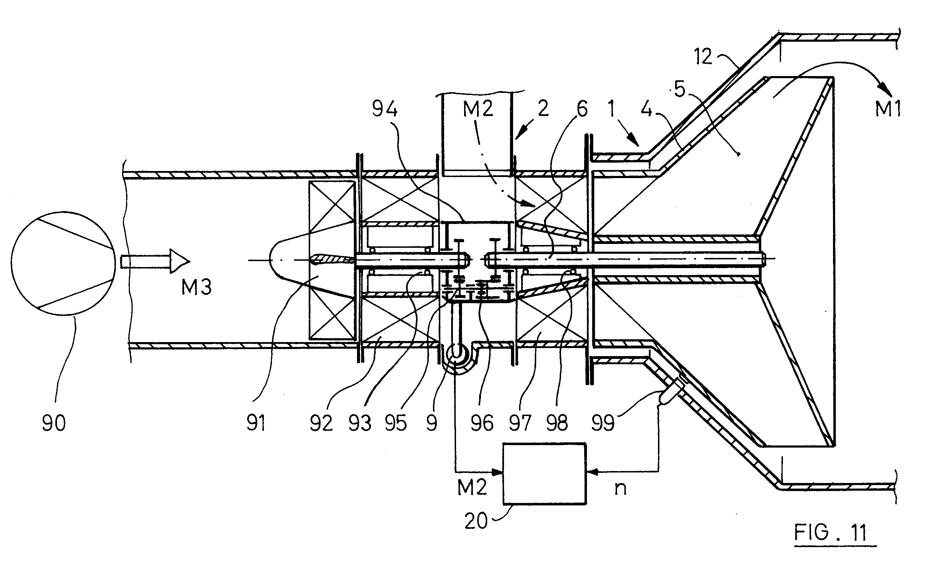

In Fig. 11 ist eine weitere Ausführung gezeigt, wobei die Massenstrom-Erfassung der von einem Verdichter 90 zugeführten Luftmenge M3 in einer Turbine 91 erfolgt, dessen Turbinenrad somit die Meßvorrichtung 3 für das Förderfluid bildet. Die Turbine 91 eignet sich im Gegensatz zum Hitzdrahtmesser in Fig. 10 auch für Flüssigkeiten und hat den besonderen Vorteil, daß die Turbine 91 zugleich als Luft- oder Flüssigkeitsmotor und damit zum Antrieb des Meßrades 4 der Meßvorrichtung 1 dient. Das an der Turbine 91 durch den Fluidstrom M3 hervorgerufene Drehmoment wird über deren Welle, die in einem Gleichrichter 92 an der Position 93 gelagert ist, an ein Umkehr-Getriebe 94 geleitet. Dort wird das Drehmoment der Turbine 91 über eine Zwischenwelle 95 und ein Umkehrrad 96 auf die Welle 6 des Meßrades 4 geleitet und ggf. untersetzt. Die Welle 6 ist durch eine Lagerung 98 in einem weiteren Gleichrichter 97 gelagert. Das Getriebegehäuse 94 ist auf den beiden Wellenstummeln drehbar gelagert und stützt sich über einen seitlich abstehenden Hebel auf die Kraftmeßzelle 9 ab. Da sich Turbine 91 und Meßrad 4 gegensinnig drehen, entspricht das an der Kraftmeßzelle 9 anliegende Drehmoment der Differenz aus den rechts- und linksdrehenden Momenten hier dem Moment M1 für den Gesamtmassenstrom minus dem Moment M3 aus der Luftförderung. Das Differenzmoment M2 für die zugeführte Fördergutmenge M2 kann somit direkt an der Kraftmeßzelle 9 erhalten werden und an das Auswerte- oder Anzeigegerät 20 weitergeleitet werden, an dem zudem eine Drehzahlmeßvorrichtung 99 angeschlossen ist. Über die Produktbildung (M2 x n) kann somit die Förderstärke festgestellt werden und z. B. durch Erhöhung der Förderleistung des Verdichters 90 die Drehzahl der Turbine 91 und damit des Meßrades 4, sowie die Ansaugleistung des Fördergutstromes M2 an der Beschickungsvorrichtung erhöht werden. Hierdurch ist auf einfache Weise eine Regelung auf einen konstanten oder gewünschten Massendurchsatz möglich. Da bei dieser Ausführung kein gesonderter Antriebsmotor für das Meßrad nötig ist, sondern dessen Antriebsenergie aus dem Förderfluid gezogen wird, eignet sich diese Ausführung insbesondere für ggf. weitverzweigte pneumatische Förderanlagen.

**Patentansprüche**

1.  Verfahren zur Massenstrombestimmung eines Fördergutes, insbesondere eines Mehrphasenstroms aus einem Schüttgut und einem Gas, wobei das Fördergut mit einem Förderfluid auf ein von einem Antriebsmotor angetriebenes Meßrad mit Leitschaufeln zur radialen Umlenkung des Materialstromes geleitet wird und wobei die nach dem Coriolis-Prinzip auftretende Änderung des Antriebsdrehmomentes für das Meßrad als Meßgröße zur Ermittlung des Massenstromes dient, dadurch gekennzeichnet, daß
der Massenstrom (M3) des Förderfluids vor Eintritt in das Meßrad (4) gemessen wird und anschließend die Differenz (M2) zwischen dem durch das Antriebsdrehmoment für das Meßrad (4) ermittelten Gesamtmassenstrom (M1) des Fördergutes mit dem Förderfluid und dem Massenstrom (M3) des Förderfluids gebildet wird.

2.  Verfahren nach Anspruch 1, dadurch gekennzeichnet, daß der Massenstrom (M3) des Förderfluids ebenfalls nach dem Coriolis-Prinzip in einem Flügelrad (14) über die Änderung des Antriebsdrehmomentes bestimmt wird.

3.  Verfahren nach Anspruch 2, dadurch gekennzeichnet, daß das Meßrad (4) und das Flügelrad (14) zur Förderung des Förderfluids elektromotorisch angetrieben sind und bei konstanter Drehzahl die Änderung der Antriebsdrehmomente (M1, M3) gemessen wird und hieraus das Differenzmoment (M2) gebildet wird.

4.  Verfahren nach Anspruch 1, 2 oder 3, dadurch gekennzeichnet, daß das Differenzmoment (M2) durch gegeneinander gerichtete Antriebsdrehmomente (M1, M3) direkt gebildet wird.

5.  Vorrichtung zur Massenstrombestimmung eines Fördergutes, insbesondere von pneumatisch geförderten Schüttgütern, mit
    - einem von einem Antriebsmotor (8) angetriebenen Meßrad (4) mit radialen Leitschaufeln (5) zur Umlenkung eines Fördergut-Materialstromes;
    - einer Beschickungseinrichtung (2) zur Zuführung des Fördergut-Materialstromes zu dem Meßrad (4); und
    - einer Drehmomentmeßvorrichtung (9), die die auftretende Änderung des Antriebsdrehmomentes als Meßgröße zur Ermittlung des Massenstromes erfaßt,
    dadurch gekennzeichnet, daß
    eine Förderfluid-Meßvorrichtung (3), die den Massenstrom (M3) des Förderfluids erfaßt, und ein Auswertegerät (20) vorgesehen sind, die die Differenz (M2) zwischen dem durch das Antriebsdrehmoment für das Meßrad (4) ermittelten Gesamtmassenstrom (M1) des Fördergutes mit dem Förderfluid und dem Massenstrom (M3) für das Förderfluid bildet.

6. Vorrichtung nach Anspruch 5, dadurch gekennzeichnet, daß die Förderfluid-Meßvorrichtung (3) durch ein angetriebenes Flügelrad (14) mit radialen Leitschaufeln und einer Drehmoment-Meßvorrichtung (19) zum Abgriff des Antriebsdrehmomentes für den Massenstrom (M3) des Förderfluids gebildet wird.

7. Vorrichtung nach Anspruch 6, dadurch gekennzeichnet, daß die beiden Drehmoment-Meßvorrichtungen (9, 19) entgegengesetzt an einer einzigen Kraftmeßzelle angreifen.

8. Vorrichtung nach einem der Ansprüche 5 bis 7, dadurch gekennzeichnet, daß eine dritte Meßvorrichtung (23) mit einer Drehmoment-Meßvorrichtung (29) und eine zweite Beschickungsvorrichtung (22) für ein weiteres Fördergut vorgesehen ist, wobei die Drehmoment-Meßvorrichtung (29) zur Übertragung ihrer Meßwerte (M4) mit dem Auswertegerät (20) in Verbindung steht und zur Bestimmung des Massenstroms des weiteren Fördergutes die Differenz (M5) zwischen dem Meßwert (M1) der Meßvorrichtung (1) und dem Meßwert (M4) der weiteren Meßvorrichtung (23) gebildet wird.

9. Vorrichtung nach einem der Ansprüche 5 bis 8, dadurch gekennzeichnet, daß die Beschickungsvorrichtung (2, 22) durch eine Saugförderanlage (70) gebildet ist, wobei zwischen der Meßvorrichtung (1) für den Gesamtmassenstrom (M1) und der Meßvorrichtung (3) für die Förderluft und ggfs. vorhandenen Reststaub Abtrennvorrichtungen, wie Zyklonabscheider (72) und Filter (75), vorgesehen sind.

10. Vorrichtung nach einem der Ansprüche 5 bis 9, dadurch gekennzeichnet, daß die Meßvorrichtung (1) für den Gesamtmassenstrom (M1) und die Förderfluid-Meßvorrichtung (3) für den Förderfluid-Massenstrom (M3) gegensinnige Umlaufrichtungen aufweisen.

11. Vorrichtung nach einem der Ansprüche 5 bis 7, dadurch gekennzeichnet, daß das Meßrad (4) bzw. Förderrad (14) an einem Auslegerarm (80, 81) gelagert ist und außerhalb des durch das Gehäuse (12) begrenzten Förderweges die Drehmoment-Meßvorrichtung (9 bzw. 19) vorgesehen ist.

12. Vorrichtung nach einem der Ansprüche 5 bis 11, dadurch gekennzeichnet, daß die Förderfluid-Meßvorrichtung (3) eine Turbine (91) aufweist, die als Antriebsmotor für das Meßrad (4) der Gesamtmassenstrom-Meßvorrichtung (1) dient.

13. Vorrichtung nach Anspruch 12, dadurch gekennzeichnet, daß die Turbine (91) und das Meßrad (4) an ein Umkehr-Getriebe (94) angeschlossen sind und gegensinnig umlaufen, wobei das Umkehr-Getriebe (94) auf den Wellen der Turbine (91) bzw. des Meßrades (4) gelagert ist und sich auf eine einzige, gemeinsame Meßvorrichtung (9) abstützt.

FIG.1

FIG. 2

FIG.3

FIG.4

FIG.5

EP 0 537 766 A2

FIG.6

FIG.7

12

FIG.9

FIG.8

C-C:

A-A:

B-B:

FIG.10

14

FIG. 11